# EUROPÄISCHE PATENTSCHRIFT

(11) **EP 4 299 687 B1**
(45) Veröffentlichungstag und Bekanntmachung des Hinweises auf die Patenterteilung: **30.10.2024**
(21) Anmeldenummer: 22181367.8
(22) Anmeldetag: 27.06.2022
(51) Int. Cl.: C09J 175/04

(54) **BINDEMITTELZUSAMMENSETZUNG UND VERFAHREN ZUM HERSTELLEN EINES HOLZWERKSTOFFS SOWIE HOLZWERKSTOFF**
WOOD MATERIAL AND BINDER COMPOSITION AND METHOD FOR PRODUCING A WOOD MATERIAL
COMPOSITION DE LIANT ET PROCÉDÉ DE FABRICATION D'UNE MATIÈRE DÉRIVÉE DU BOIS, AINSI QUE MATIÈRE DÉRIVÉE DU BOIS

(43) Veröffentlichungstag der Anmeldung: 03.01.2024
(73) Patentinhaber: SWISS KRONO Tec AG, 6004 Luzern (CH)
(72) Erfinder: KALWA, Norbert, 32805 Horn - Bad Meinberg (DE); GIER, Andreas, 66399 Mandelbachtal (DE); LUCJAN, Tomasz, 6442 Gersau (CH); HASCH, Joachim, 10317 Berlin (DE)
(74) Vertreter: Kalkoff & Partner Patentanwälte mbB

(56) Entgegenhaltungen:
- US-A1- 2022 154 002
- US-B2- 10 119 051
- US-B2- 10 189 178

## Beschreibung

Die Erfindung betrifft eine Bindemittelzusammensetzung zum Herstellen eines Holzwerkstoffs, insbesondere eines plattenförmigen Holzwerkstoffs, wie Holzspanplatten oder Holzfaserplatten, insbesondere OSB, HDF oder MDF-Platten, sowie Sperrholz und Brettschichtholz, ein Verfahren zum Herstellen einer solchen Bindemittelzusammensetzung, ein Verfahren zum Herstellen eines solchen Holzwerkstoffs sowie einen solchen Holzwerkstoff.

Bei der Herstellung von Holzwerkstoffen kommen eine Vielzahl von Bindemittelzusammensetzungen, insbesondere Leime, zur Anwendung. Dabei werden je nach Anwendung unterschiedliche Bindemittelzusammensetzungen favorisiert bzw. sind besonders geeignet. Für Holzwerkstoffplatten, die später in der Möbelherstellung oder im Innenausbau verwendet werden sollen, haben sich Bindemittelzusammensetzungen auf Basis von Harnstoff/Formaldehyd als besonders geeignet erwiesen.

Für Anwendungen, bei denen mit erhöhten Luftfeuchten bzw. nachstoßender Feuchtigkeit aus angrenzenden Bauteilen zu rechnen ist, wie z.B. bei Bodenbelägen, werden meist Harnstoff-Formaldehyd-Leime, gegebenenfalls verstärkt mit Melamin, eingesetzt, wobei den erhöhten Anforderungen durch eine erhöhte Menge der Bindemittelzusammensetzungen Rechnung getragen wird.

Bei Holzwerkstoffplatten, die in Bereichen mit hohen Luftfeuchten oder in direktem Kontakt mit Wasser verwendet werden, haben sich mit Melaminharz verstärkte Harnstoff-Formaldehyd-Leime, Phenolharze oder polymeres Diphenylmethandiisocyanat (PMDI) als geeignet erwiesen. Für die verschiedenen Anwendungen kommen dabei insbesondere Sperrhölzer, Spanplatten und OSB (Oriented Strand Boards) zur Anwendung. Obwohl generell für die oben beschriebenen Holzwerkstoffe alle Bindemittel zur Anwendung kommen können, die durch Feuchtigkeit oder Wasser nicht hydrolysiert werden, hat sich für OSB insbesondere polymeres Diphenylmethandiisocyanat (PMDI) als besonders geeignet erwiesen.

Bei der Herstellung von Holzwerkstoffen stehen als grundsätzliche Zielsetzungen generell neben der möglichst effektiven Verwendung der Anlagen auch eine möglichst effektive Verwendung der Rohstoffe. Dabei stehen diese beiden Zielsetzungen häufig miteinander in einem Konflikt. Beispielsweise muss, um eine möglichst hohe Anlagengeschwindigkeit zu realisieren, mit einer erhöhten Bindemittelmenge gearbeitet werden. Bei einer bezüglich der Bindemittelmenge optimierten Fahrweise sind hingegen Abstriche in der Anlagengeschwindigkeit hinzunehmen. Generell ist als limitierender Faktor der Wärmetransport aus den Heizplatten der Presse in die Mitte des Span- bzw. des Faserkuchens anzusehen. Dieser Zielkonflikt führt je nach Fahrweise zu höheren Fixkosten der verwendeten Anlagen oder zu höheren Materialkosten. Dabei kann durch den Einsatz von Härtern oder Aggregaten, die eine beschleunigte Einbringung von Wärme in den Span- oder Faserkuchen ermöglichen, diese Problematik etwas verringert werden.

Allerdings ist dabei zu berücksichtigen, dass beispielsweise Härter zwar eine schnellere Aushärtung erlauben, aber bei Anlagenstillständen zu Voraushärtungen der Bindemittel führen. Dies ist besonders problematisch beim Einsatz von polymerem Diphenylmethandiisocyanat. Dieser Polymerklebstoff reagiert mit vielen Katalysatoren bereits bei Raumtemperatur, was zu der Voraushärtung führen kann. Entsprechend ist es vorteilhaft, einen Katalysator zu verwenden, der die Aushärtung gut steuerbar macht sowie eine möglichst geringe Voraushärtung verursacht.

Mit einem entsprechenden Katalysator härtet die Bindemittelzusammensetzung zielgerichtet erst zum gewünschten Zeitpunkt aus, was jedoch zu dem Nachteil führt, dass während des Verfahrensablaufs das nicht gehärtete Bindemittel länger im Kontakt mit dem zu bindenden Holzmaterial steht und dabei zunehmend in dieses eindringt. Dabei haben Untersuchungen gezeigt, dass besonders bei der Beleimung von Holzmaterial, z.B. mit PMDI, und insbesondere von Strands für OSB aus Nadelhölzern ein Wegschlagen bzw. ein Diffundieren des Bindemittels in das Holz besonders ausgeprägt ist. Ein Grund hierfür ist, dass insbesondere das hydrophobe PMDI-Bindemittel von der Holzoberfläche, die je nach Jahreszeit mehr oder weniger Fettsäuren enthält, absorbiert wird. Damit steht das Bindemittel nur noch teilweise für die Verleimung der Strands in der Fläche zur Verfügung, sodass eine hohe Bindemittelmenge notwendig ist, um eine ausreichende Bindung zu erreichen. Dies führt zu erhöhten Herstellungskosten sowie teils auch zu einer nicht optimalen Aufbringung des Bindemittels. Zudem ergeben sich technologische Einschränkungen aufgrund des Eindringens des Bindemittels in das Holzmaterial hinsichtlich der zu verwendenden Anlagen sowie der möglichen Verfahrensführung.

Aus der US 10 189 178 B2 ist bereits ein Verfahren zum Herstellen von Holzwerkstoffplatten, insbesondere OSB-Holzwerkstoffplatten bekannt, bei dem zunächst ein Bereitstellen von Holzstrands und dann ein Auftragen von mindestens einem Klebstoffsystem auf die Holzstrands erfolgt, wobei das Klebstoffsystem mindestens einen Polymerklebstoff und mindestens einen Nanopartikel kleiner 500 nm umfasst. Nachfolgend erfolgt dann ein Verpressen der mit dem Klebstoffsystem versetzten Holzstrands zu OSB-Holzwerkstoffplatten. Dabei sind die Nanopartikel mit einer Silanverbindung modifiziert, um eine Verbesserung der Benetzung der Strandoberfläche mit Leim und eine verbesserte Haftung des Leims an der Oberfläche zu erreichen. Weiterhin kann das Klebstoffsystem unter Verwendung einer Säure oder eines Ammoniumsalzes als Katalysator hergestellt werden.

Die US 10 119 051 B2 zeigt bereits eine Bindemittelzusammensetzung, insbesondere für Holzwerkstoffplatten, herstellbar aus mindestens einem Polymerklebstoff, mindestens einer polyalkoholischen Verbindung und mindestens einer derart spezifisch modifizierten Silanverbindung, dass das aus der Silanverbindung und dem Polyalkohol entstehende Molekül über reaktive Gruppen verfügt, die mit dem Polymerklebstoff oder auch mit den OH-Gruppen des Holzes reagieren können. Diese neuen Verbindungen und die durch Kondensation mit dem Leim entstandenen Makromoleküle sind nunmehr aufgrund der hydrophilen Reste nicht mehr in der Lage, die hydrophobe Fettsäureschicht der Strands zu passieren. Dadurch bedingt verbleibt die vorliegende Bindemittelzusammensetzung auf der Oberfläche der Strands bzw. Fasern und diffundiert nicht in die Holzmatrix ein.

Der Erfindung liegt daher die Aufgabe zugrunde, eine Bindemittelzusammensetzung zum Herstellen eines Holzwerkstoffs, insbesondere eines plattenförmigen Holzwerkstoffs, ein Verfahren zum Herstellen eines solchen Holzwerkstoffs sowie einen solchen Holzwerkstoff bereitzustellen, bei denen die Geschwindigkeit des Aushärtens des Bindemittels gezielt gesteuert werden kann und zugleich ein Diffundieren des Bindemittels in das zu bindende Holzmaterial bestmöglich verhindert wird, wodurch ein sicherer, schneller und kostengünstiger Fertigungsprozess mit einem geringstmöglichen Bindemittelgebrauch ohne eine Verringerung der Produktqualität ermöglicht wird.

Die Aufgabe wird erfindungsgemäß durch eine Bindemittelzusammensetzung zum Herstellen eines Holzwerkstoffs gemäß Anspruch 1, durch ein Verfahren zum Herstellen eines Holzwerkstoffs gemäß Anspruch 10 sowie durch einen Holzwerkstoff gemäß Anspruch 15 gelöst. Vorteilhafte Weiterbildungen der Erfindung sind in den abhängigen Ansprüchen angegeben.

Die erfindungsgemäße Bindemittelzusammensetzung zum Herstellen eines Holzwerkstoffs, insbesondere eines plattenförmigen Holzwerkstoffs, wie Holzspanplatten oder Holzfaserplatten, insbesondere OSB, HDF oder MDF-Platten, sowie Sperrholz und Brettschichtholz, umfasst eine wenigstens einen Polmerklebstoff aufweisende, organische Phase, eine wässrige Phase, wenigstens einen Phasentransferkatalysator zum Beschleunigen des Aushärtens des Polymerklebstoffs sowie ein Hydrophilierungsmittel umfassend bzw. gebildet aus wenigstens einer Silanverbindung zum Erhöhen der Hydrophilie des Polymerklebstoffs und/oder zum Reduzieren des Eindringens des Polymerklebstoffs in das zu bindende Material, insbesondere in das zu bindende Spanmaterial, des Holzwerkstoffs.

Weiterhin betrifft die Erfindung ein Verfahren zum Herstellen einer erfindungsgemäßen Bindemittelzusammensetzung, mit wenigstens den Schritten eines Bereitstellens von wenigstens einer Silanverbindung, bevorzugt von mindestens zwei verschiedenen Silan-verbindungen, insbesondere der allgemeinen Formeln (I) und/oder (II), einer Zugabe von wenigstens einer polyalkoholischen Verbindung zu der wenigstens einen Silanverbindung und bevorzugt einer Zugabe von mindestens einem Katalysator, insbesondere einer Säure, zu der Mischung aus wenigstens einer Silanverbindung und wenigstens einer polyalkoholischen Verbindung. Nachfolgend erfolgt ein Ausfällen und/oder ein Abtrennen des Reaktionsgemisches aus der wenigstens einen Silanverbindung und der wenigstens einen polyalkoholischen Verbindung sowie eine Zugabe des Phasentransferkatalysators. Zugleich oder bevorzugt nachfolgend erfolgt dann schließlich eine Zugabe von mindestens einem Polymerklebstoffsystem zu dem Phasentransferkatalysator und/oder dem abgetrennten Reaktionsgemisch aus der wenigstens einen Silanverbindung und der wenigstens einen polyalkoholischen Verbindung. Darüber hinaus kann das Herstellen einer erfindungsgemäßen Bindemittelzusammensetzung auch ausschließlich unter Verwendung einer Silan-verbindung ohne einen Polyalkohol als Reaktionspartner erfolgen, sodass dann auch kein entsprechender Katalysator benötigt wird. In diesem Fall wird lediglich wenigstens eine Silanverbindung als Hydrophilierungsmittel, ein Phasentransferkatalysator sowie wenigstens ein Polymerklebstoff miteinander gemischt.

Zudem betrifft die Erfindung ein Verfahren zum Herstellen eines Holzwerkstoffs, insbesondere eines plattenförmigen Holzwerkstoffs, wie Holzspanplatten oder Holzfaserplatten, insbesondere OSB, HDF oder MDF-Platten, sowie Sperrholz und Brettschichtholz, wobei zunächst ein Herstellen und/oder ein Bereitstellen eines Spanmaterials und nachfolgend eine Zugabe einer Bindemittelzusammensetzung zu dem Spanmaterial erfolgt, wobei die Bindemittelzusammensetzung eine wenigstens einen Polymerklebstoff aufweisende, organische Phase und eine zweite, mit der organischen Phase nicht mischbare wässrige Phase, einen Phasentransferkatalysator zum Beschleunigen des Aushärtens des Polymerklebstoffs sowie ein Hydrophilierungsmittel umfassend wenigstens eine Silanverbindung zum Erhöhen der Hydrophilie des Polymerklebstoffs und/oder zum Reduzieren des Eindringens des Polymerklebstoffs in das zu bindende Spanmaterial des Holzwerkstoffs aufweist. Schließlich erfolgt dann ein Formen des Holzwerkstoffs aus dem beleimten Spanmaterial, insbesondere ein Verpressen zu einem plattenförmigen Holzwerkstoff.

Der erfindungsgemäße Holzwerkstoff, insbesondere hergestellt nach dem erfindungsgemäßen Verfahren, weist wenigstens ein Spanmaterial sowie wenigstens eine ausgehärtete Bindemittelzusammensetzung in wenigstens einer Schicht des Holzwerkstoffs, insbesondere eine erfindungsgemäße Bindemittelzusammensetzung, auf, wobei die Bindemittelzusammensetzung wenigstens einen ausgehärteten Polymerklebstoff, einen Phasentransferkatalysator zum Beschleunigen des Aushärtens des Polymerklebstoffs sowie ein Hydrophilierungsmittel umfassend wenigstens eine Silanverbindung zum Erhöhen der Hydrophilie des Polymerklebstoffs und/oder zum Reduzieren des Eindringens des Polymerklebstoffs in das zu bindende Spanmaterial des Holzwerkstoffs aufweist.

Schließlich betrifft die Erfindung die Verwendung einer Bindemittelzusammensetzung gemäß dieser Erfindung mit einem Phasentransferkatalysator zum Herstellen eines Holzwerkstoffs und bevorzugt in der Herstellung von Holzspanplatten oder Holzfaserplatten, insbesondere OSB, HDF oder MDF-Platten, sowie Sperrholz und Brettschichtholz.

Die Erfinder haben erkannt, dass die Verwendung eines Phasentransferkatalysators in Kombination mit einem Hydrophilierungsmittel in einer Bindemittelzusammensetzung eines Holzwerkstoffs es ermöglicht, die Reaktivität und dabei sowohl die Geschwindigkeit des Aushärtens gezielt zu steuern und zugleich ein Wegschlagen des Bindemittels bzw. ein Eindringen des Bindemittels in größerem Umfang in das Holz erfolgreich zu minimieren oder sogar im Wesentlichen zu verhindern, sodass zugleich ein Einsatz einer geringen Menge des Bindemittels ermöglicht und ein besonders gleichmäßiges und gezieltes Aushärten erreicht werden kann.

Zudem ergibt sich aus der Kombination des Hydrophilierungsmittels mit dem Phasentransferkatalysator der Vorteil, dass die zum Abbinden bzw. Aushärten benötigte, eingetragene Wärme das Bindemittel besonders gleichmäßig erreicht, da sich wenigstens der überwiegende Teil des Bindemittels zwischen dem Spanmaterial und nicht im Inneren des Holzes befindet, sodass eine besonders gleichmäßige Wirkung des Katalysators erreichbar ist.

Unter einer Bindemittelzusammensetzung wird eine Zusammensetzung verstanden, die zur Zugabe und zum Verkleben von Holz und insbesondere von Spanmaterial für einen Holzwerkstoff vorgesehen ist, wobei die Bindemittelzusammensetzung bevorzugt derart gebildet ist, dass ausschließlich aus dem Spanmaterial sowie der Bindemittelzusammensetzung ein Holzwerkstoff hergestellt werden kann. Grundsätzlich ist es jedoch auch möglich, dem Holzwerkstoff weitere Bestandteile, wie beispielsweise Hilfs- und Füllstoffe, hinzuzufügen. Dabei kann die Bindemittelzusammensetzung bereits gebrauchsfertig vorliegen und/oder aus einer einzigen Komponente gebildet sein.

Alternativ kann die Bindemittelzusammensetzung aber auch aus mehreren, getrennt bereitgestellten Komponenten, insbesondere aus zwei Komponenten, gebildet sein, die erst vor oder bei dem Gebrauch zusammengeführt und vermischt werden. Dabei kann insbesondere die organische Phase die eine Komponente und die wässrige Phase die andere Komponente sein, wobei der Phasentransferkatalysator und/oder das Hydrophilierungsmittel bevorzugt in der wässrigen Phase enthalten ist. Darüber hinaus ist es jedoch auch denkbar, dass das Hydrophilierungsmittel und/oder der Phasentransferkatalysator als Salz oder gelöst als weitere, insbesondere dritte und/oder vierte Komponente bereitgestellt und/oder erst zum Gebrauch zugegeben wird. Sowohl der Phasentransferkatalysator, als auch das Hydrophilierungsmittel kann auch in-situ hergestellt werden. Die gebrauchsfertige Bindemittelzusammensetzung aus einer oder mehreren bereits gemischten Komponenten wird häufig auch als Leim oder Harz bezeichnet und entsprechend wird das Aufbringen des Bindemittels auf das Spanmaterial als Beleimen bezeichnet.

Weiterhin ist es insbesondere denkbar, dass die mehreren Komponenten der Bindemittelzusammensetzung erst auf der Oberfläche des zu verklebenden Holzes, insbesondere des Spanmaterials, zusammentreffen, wobei bevorzugt erst eine erste Komponente, insbesondere eine wässrige Phase, der Phasentransferkatalysator und/oder das Hydrophilierungsmittel auf das Spanmaterial und/oder zu dem Spanmaterial gebracht und anschließend die organische Phase mit dem wenigstens einen Polymerklebstoff, insbesondere einem Isocyanat-Bindemittel, zugegeben wird.

Der Holzwerkstoff kann grundsätzlich ein beliebiger Werkstoff sein, der mehrheitlich, bevorzugt abgesehen von der Bindemittelzusammensetzung zu wenigstens 90 % aus Holz, Pflanzenfasern und/oder einem daraus hergestellten Material durch ein Verbinden mehrerer Stücke dieses Materials mit einer Bindemittelzusammensetzung gebildet ist. Bevorzugt handelt es sich dabei um wenigstens ein Spanmaterial. Der Holzwerkstoff kann dabei grundsätzlich eine beliebige Form aufweisen, wobei plattenförmige Holzwerkstoffe und insbesondere Lignocellulose und/oder faserhaltige Platten, Spanplatten und/oder Grobspanplatten bevorzugt sind.

Das Spanmaterial kann grundsätzlich beliebige Pflanzenspäne und/oder -fasern aufweisen und ist bevorzugt im Wesentlichen aus Pflanzenspänen gebildet. Besonders bevorzugt wird das Spanmaterial aus Holz hergestellt. Ganz besonders bevorzugt besteht das Spanmaterial aus langen Spänen (strands) und/oder groben Spänen, insbesondere zum Herstellen einer Grobspanplatte, auch OSB (oriented strand boards) genannt. Die zur Herstellung einer Grobspanplatte hergestellten oder bereitgestellten Holzspäne können eine Länge zwischen 50 bis 200 mm, bevorzugt 70 bis 180 mm, insbesondere bevorzugt 90 bis 150 mm; eine Breite zwischen 5 bis 50 mm, bevorzugt 10 bis 30 mm, insbesondere bevorzugt 15 bis 20 mm; und eine Dicke zwischen 0,1 und 2 mm, bevorzugt zwischen 0,3 und 1,5 mm, insbesondere bevorzugt zwischen 0,4 und 1 mm aufweisen. Für Spanplatten sind die Spangrößen für Deck- und/oder Mittelschicht bevorzugt im Bereich von < 1 mm bis ca. 30 mm.

Obwohl das Formen des Holzwerkstoffs grundsätzlich in beliebiger Weise vorgenommen werden kann, erfolgt es bevorzugt als kontinuierlicher Prozess, insbesondere durch Aufstreuen des beleimten Spanmaterials auf eine Fördervorrichtung, insbesondere auf ein Förderband, und/oder durch Verpressen des beleimten Spanmaterials zu dem Holzwerkstoff. Das Formen des Holzwerkstoffs und insbesondere das Verpressen erfolgt bevorzugt unter hohem Druck und/oder bei einer hohen Temperatur, bevorzugt von wenigstens 150°C, besonders bevorzugt zwischen 170°C und 220°C und ganz besonders bevorzugt zwischen 180°C und 220°C.

Insbesondere bevorzugt wird das beleimte Spanmaterial zum Herstellen einer Grobspanplatte in Streuapparaturen alternierend längs und quer zur Produktionsrichtung gestreut, sodass das Spanmaterial kreuzweise, besonders bevorzugt in wenigstens drei Schichten angeordnet ist, insbesondere einer unteren Deckschicht, einer Mittelschicht und einer oberen Deckschicht. Die Streurichtung von unterer und oberer Deckschicht ist dabei bevorzugt gleich und/oder weicht von der Streurichtung der Mittelschicht ab.

Das Herstellen des Spanmaterials erfolgt bevorzugt durch ein Abschälen von entrindetem Rundholz, bevorzugt Nadelhölzer, in Längsrichtung und/oder durch rotierende Messer. Weiterhin bevorzugt wird das hergestellte Spanmaterial vor der Zugabe des Bindemittels getrocknet, insbesondere um die natürliche Feuchtigkeit des Spanmaterials bei hohen Temperaturen zu reduzieren. Besonders bevorzugt liegt die Feuchtigkeit des Spanmaterials nach dem Trocknen unter 10% und ganz besonders bevorzugt unter 7 %, um Spalter beim späteren Verpressen zu vermeiden und/oder eine starke Dampfbildung beim Verpressen zu vermeiden.

Die Zugabe der Bindemittelzusammensetzung zu dem Spanmaterial ist bevorzugt ein Beleimen wenigstens eines Teils und bevorzugt des gesamten Spanmaterials als Ausgangsmaterial für den Holzwerkstoff. Dabei wird weiterhin bevorzugt die Bindemittelzusammensetzung fein verteilt auf das Spanmaterial aufgebracht. Alternativ ist es denkbar, dass erst eine erste Komponente der Bindemittelzusammensetzung aufgebracht bzw. das Spanmaterial darin eingeweicht und anschließend erst die zweite Komponente aufgebracht wird. Die Menge der Bindemittelzusammensetzung, insbesondere im Falle der Verwendung von PMDI als Bindemittel, beträgt bevorzugt 1 bis 10 Gew%, besonders bevorzugt 1,5 bis 5 Gew%, ganz besonders bevorzugt 2 bis 5 Gew% und insbesondere bevorzugt 2 bis 3 Gew% bezogen auf die Gesamtmenge des Spanmaterials.

Bei dem erfindungsgemäßen Holzwerkstoff ist nach dessen Herstellung die Bindemittelzusammensetzung bevorzugt vollständig gehärtet, wobei insbesondere bevorzugt ein Isocyanat-Bindemittel mit dem Wasser der wässrigen Phase zu Carbamidsäuren und/oder weiter zu den entsprechenden Aminen und/oder Polyharnstoffen reagiert ist. Dabei besteht die gehärtete Bindemittelzusammensetzung bevorzugt im Wesentlichen aus Polyharnstoffen, dem Phasentransferkatalysator und/oder weiteren Bestandteilen der organischen und/oder wässrigen Phase.

Erfindungsgemäß weist die Bindemittelzusammensetzung wenigstens einen Polymerklebstoff und bevorzugt wenigstens ein Isocyanat-Bindemittel auf. Dabei kann die Bindemittelzusammensetzung grundsätzlich, insbesondere in Abhängigkeit der gewünschten Eigenschaften des hergestellten Holzwerkstoffs, nur einen einzigen Polymerklebstoff oder aber ein Gemisch aus mehreren Polymerklebstoffen aufweisen, wobei besonders bevorzugt alle Polymerklebstoffe Polyurethan-Klebstoffe sind und/oder jeweils wenigstens ein Isocyanat-Bindemittel aufweisen bzw. auf wenigstens einem Diisocyanat basieren. Dabei beträgt der Anteil aller Bindemittel in der Bindemittelzusammensetzung bevorzugt zwischen 60 % und 100 %, besonders bevorzugt wenigstens 85 % und ganz besonders bevorzugt wenigstens 95 %. Bevorzugt wird dabei der Polymerklebstoff und insbesondere polymeres Diphenylmethandiisocyanat als reines Bindemittel und/oder ohne eine weitere Zugabe von Wasser in der organischen Phase verwendet. Der Wasseranteil bzw. der Anteil der wässrigen Phase an der Bindemittelzusammensetzung beträgt bevorzugt zwischen 0 und 15 %, besonders bevorzugt zwischen 0,01 und 10 % und ganz besonders bevorzugt zwischen 0,5 und 8 %.

Erfindungsgemäß weist die Bindemittelzusammensetzung wenigstens einen, bevorzugt genau einen Phasentransferkatalysator auf, wobei es jedoch auch grundsätzlich denkbar ist, mehrere chemisch unterschiedliche Phasentransferkatalysatoren zugleich einzusetzen. Der erfindungsgemäße Phasentransferkatalysator ermöglicht grundsätzlich den Eintritt von Bestandteilen der wässrigen Phase, insbesondere von Wasser selbst, in die nicht wässrige bzw. organische Phase, insbesondere zu dem Polymerklebstoff und/oder einem Isocyanat-Bindemittel, wobei dann das Wasser ganz besonders bevorzugt der Reaktand zum Härten des Bindemittels ist. Entsprechend transferiert der Phasentransferkatalysator bevorzugt Wasser aus der wässrigen Phase in die organische Phase, wo eine Reaktion mit dem Polymerklebstoff und insbesondere dem Isocyanat erfolgen kann und darauffolgend der Phasentransferkatalysator wieder frei wird.

Somit beschleunigt der Phasentransferkatalysator die Reaktion des Härtens des Bindemittels, ist jedoch selbst nicht direkt an der Reaktion beteiligt. Insbesondere bevorzugt wird der Phasentransferkatalysator derart gewählt, dass dieser nicht an einer Aktivierung der Isocyanat-Gruppe des Bindemittels beteiligt ist. Der Phasentransferkatalysator führt zu einer geringeren notwendigen Reaktionstemperatur und/oder zu einer verkürzten Reaktionszeit und ermöglicht zudem eine gute Steuerbarkeit der Reaktionskinetik. Dabei besteht bevorzugt ein linearer Zusammenhang zwischen der Gelierzeit bzw. der Dauer des Härtens und der Menge des eingesetzten Phasentransferkatalysators.

Das Hydrophilierungsmittel ist grundsätzlich eine Substanz oder ein Substanzgemisch, das die hydrophilen Eigenschaften des Bindemittels beeinflusst und dabei insbesondere die Hydrophilie erhöht. Dazu weist das Hydrophilierungsmittel bevorzugt wenigstens einen hydrophilen Bereich sowie wenigstens einen hydrophoben Bereich auf, wobei der hydrophobe Bereich weiterhin bevorzugt unmittelbar mit der Bindemittelzusammensetzung und/oder mit dem darin enthaltenen Polymerklebstoff wechselwirkt.

Das Hydrophilierungsmittel kann dabei eine reine einzelne Substanz oder ein Substanzgemisch sein, wobei das Hydrophilierungsmittel insbesondere ein durch eine Reaktion entstandenes Gemisch verschiedenster Substanzen sein kann. Dabei entsteht durch die Reaktion wenigstens einer Silanverbindung und wenigstens eines Polyalkohols zunächst eine Verbindung bzw. ein Reaktionsgemisch, welches aufgrund der Vielzahl an OH-Gruppen im Polyalkohol auf einer Molekülseite stark hydrophil ist. Andererseits verfügt das aus der Silanverbindung und dem Polyalkohol hergestellte Molekül aufgrund des spezifisch modifizierten Silans über reaktive Gruppen, die mit dem Polymerklebstoff, wie z.B. PMDI-Leim, oder auch mit den OH-Gruppen des Holzes reagieren können. Diese neuen Verbindungen und die durch Kondensation mit dem Polymerklebstoff bzw. dem Leim entstandenen Makromoleküle sind nunmehr aufgrund der hydrophilen Reste nicht mehr in der Lage, die hydrophobe Fettsäureschicht des Spanmaterials zu passieren. Dadurch bedingt verbleibt die vorliegende Bindemittelzusammensetzung auf der Oberfläche des Spanmaterials bzw. der Fasern und diffundiert nicht in die Holzmatrix ein. Entsprechend wirkt das Hydrophilierungsmittel bevorzugt, indem dieser den Polymerklebstoff mit einem hydrophilen Anker ausstattet. Alternativ zu einem Reaktionsprodukt kann als Hydrophilierungsmittel jedoch auch gleich ein Silan bzw. eine Silanverbindung und insbesondere eine entsprechend modifizierte Silanverbindung eingesetzt werden.

Um die Reaktion der wenigstens einen Silanverbindung mit dem wenigstens einen Polyalkohol steuern zu können, wird bevorzugt ein Katalysator zugesetzt. Als Katalysator eignen sich insbesondere anorganische und/oder organische Säuren, die besonders bevorzugt ausgewählt sind aus einer Gruppe enthaltend Phosphorsäure, Essigsäure, p-Toluolsulfonsäure, Salzsäure, Ameisensäure oder Schwefelsäure. Ebenfalls geeignet sind Ammoniumsalze wie Ammoniumsulfat, die als schwache Säuren reagieren. Dabei ist jedoch p-Toluolsulfonsäure besonders bevorzugt.

Zum Ausfällen des Reaktionsgemisches aus wenigstens einer Silanverbindung und insbesondere wenigstens einer Verbindung der Formel (I) und/oder (II) sowie wenigstens einer polyalkoholischen Verbindung hat sich die Verwendung von Natriumglycerophosphat als besonders geeignet erwiesen. Als weitere Ausfällungsmittel kommen auch Laugen, wie NaOH, KOH oder aber auch Ammoniumhydroxyd-Lösungen in Betracht. Bevorzugt wird das Ausfällungsmittel zusammen mit Wasser dem Reaktionsgemisch zugegeben. Auf diese Weise wird das Reaktionsprodukt in der wässrigen Phase konzentriert und von den Hydrolyseprodukten, wie z.B. Ethanol, abgetrennt.

Obwohl grundsätzlich wenigstens ein beliebiger Phasentransferkatalysator verwendet werden kann, weist der Phasentransferkatalysator bei einer vorteilhaften Ausgestaltung der Bindemittelzusammensetzung ein Oniumion und bevorzugt ein Ammonium-, Phosphonium- und/oder Sulfoniumion auf und ist besonders bevorzugt Triethylbenzylammoniumchlorid. Zudem kann wenigstens ein Phasentransferkatalysator auch ein Kronenether, insbesondere 12-Krone-4, sein.

Bei einer bevorzugten Ausgestaltung der erfindungsgemäßen Bindemittelzusammensetzung ist der Polymerklebstoff ausschließlich ein Polyurethan-Klebstoff auf der Basis eines Isocyanat-Bindemittels, bevorzugt auf Basis von aromatischen Polyisocyanaten, insbesondere Polydiphenylmethandiisocyanat (PMDI), Toluylendiisocyanat (TDI) und/oder Diphenylmethandiisocyanat (MDI). Dabei ist ein polymeres Diphenylmethandiisocyanat besonders bevorzugt. Insbesondere bevorzugt ist der einzige Polymerklebstoff ein Polyurethan-Klebstoff auf der Basis eines polymeren Diphenylmethandiisocyanats. Generell beträgt der Gehalt an Polymerklebstoff in der Bindemittelzusammensetzung bevorzugt mindestens 70 Gew%, besonders bevorzugt mindestens 80 Gew% und ganz besonders bevorzugt mindestens 95 Gew%.

In einer ebenfalls bevorzugten Ausführungsform der erfindungsgemäßen Bindemittelzusammensetzung ist es ebenfalls möglich, mehr als einen Polymerklebstoff zu verwenden. So können grundsätzlich insbesondere mehrere Polyadditionsklebstoffe, wie ein Epoxidharz-, Polycyanurat- und/oder ein Polyurethan-Klebstoff, insbesondere ein Polyurethan-Klebstoff auf der Basis von Polydiphenylmethandiisocyanat (PMDI), verwendet werden, wobei besonders bevorzugt alle Polymerklebstoffe jeweils auf wenigstens einem Diisocyanat basieren.

Bevorzugt umfasst das Hydrophilierungsmittel wenigstens einen Polyalkohol und insbesondere wird das Hydrophilierungsmittel durch eine Reaktion der wenigstens einen Silanverbindung mit wenigstens einem Polyalkohol gebildet. Dabei ist der wenigstens eine Polyalkohol des Hydrophilierungsmittels bevorzugt aus einer Gruppe enthaltend vierwertige, fünfwertige, sechswertige Alditole oder einen höherwertigen Alkohol mit mehr als sechs Hydroxygruppen als eine polyalkoholische Verbindung ausgewählt. Auch eine Verwendung von n-Polyglycolen und n-Polyvinylalkoholen als Polyalkohol ist grundsätzlich denkbar. Die Menge der polyalkoholischen Verbindung in der Bindemittelzusammensetzung beträgt dabei bevorzugt zwischen 5 bis 50 Gew%, besonders bevorzugt 10 bis 30 Gew% und ganz besonders bevorzugt zwischen 5 bis 10 Gew% bezogen auf die Gesamtmenge der Bindemittelzusammensetzung.

Eine besonders bevorzugte Ausgestaltung der erfindungsgemäßen Bindemittelzusammensetzung sieht zudem vor, dass wenigstens ein Alditol aus einer Gruppe enthaltend als vierwertige Alkohole Threit, Erythrit, Pentaerythrit, als fünfwertige Alkohole Arabit, Adonit, Xylit und als sechswertige Alkohole Sorbit, Mannit, Dulcit, Dipentaerythrit ausgewählt ist. Alditole sind dabei auch bekannt als reduzierte Zucker. Auch höherwertige Alkohole mit mehr als sechs Hydroxygruppen, wie z.B. sieben oder acht Hydroxygruppen können zum Einsatz kommen. Geeignete Polyglycole sind z.B. Polyethylen- oder Polypropylenglycole. Als besonders vorteilhaft hat sich jedoch die Verwendung von Sorbit erwiesen.

Eine besonders bevorzugte Ausgestaltung der erfindungsgemäßen Bindemittelzusammensetzung sieht vor, dass die wenigstens eine Silanverbindung eine Verbindung der allgemeinen Formel (I)

RₐSiX₍₄₋ₐ₎ (I),

oder der allgemeinen Formel (II)

O_{b}X_{c}(OH)_{d}RₑSiO(4-b-c-d-e)/2 (II),

ist, wobei
- X H, OH oder ein hydrolysierbarer Rest ausgewählt ist aus der Gruppe umfassend Halogen, Alkoxy, Carboxy, Amino, Monoalkylamino oder Dialkylamino, Aryloxy, Acyloxy, Alkylcarbonyl,
- R ein nicht-hydrolysierbarer organischer Rest R ausgewählt ist aus der Gruppe umfassend substituiertes und nicht-substituiertes Alkyl, substituiertes und nicht-substituiertes Aryl, substituiertes und nicht-substituiertes Alkenyl, substituiertes und nicht-substituiertes Alkinyl, substituiertes und nicht-substituiertes Cycloalkyl, die durch -O- oder-NH- unterbrochen sein können, und wobei
- R mindestens eine funktionelle Gruppe Q aufweisen kann, die ausgewählt ist aus einer Gruppe enthaltend eine Epoxid-, Hydroxy-, Ether-, Amino-, Monoalkylamino, Dialkylamino-, substituierte und nicht-substituierte Anilino-, Amid-, Carboxy-, Alkinyl-, Acryl-, Acryloxy-, Methacryl-, Methacryloxy-, Mercapto,- Cyano-, Alkoxy,- Isocyanato-, Aldehyd-, Alkylcarbonyl-, Säureanhydrid- und/oder Phosphorsäuregruppe,
- R und X jeweils gleich oder verschieden voneinander sein können, und
- a = 0, 1, 2, 3, insbesondere 0 oder 1 ist,
- b, c, d = 0 oder 1 sind, und
- e = 1, 2, 3 ist.

Dabei leiten sich die silanhaltigen Verbindungen mit der allgemeinen Formel (II) unmittelbar als Hydrolyse- und/oder als Kondensationsprodukte aus den Silan-Verbindungen der allgemeinen Formel (I) ab. Die Hydrolyse und/oder die Kondensation der Verbindungen der allgemeinen Formel (I) wird dabei insbesondere durch die Reaktionsbedingungen, insbesondere durch saure Reaktionsbedingungen, während der Bindemittelherstellung bedingt und beeinflusst.

Bei den Silanverbindungen der Formel (I) ist der Rest X vorteilhafterweise ausgewählt aus einer Gruppe enthaltend Fluor, Chlor, Brom, Iod, C₁₋₆-Alkoxy, insbesondere Methoxy, Ethoxy, n-Propoxy und Butoxy, C₆-C₁₀-Aryloxy, insbesondere Phenoxy, C₂-C₇-Acyloxy, insbesondere Acetoxy oder Propionoxy, C₂-C₇-Alkylcarbonyl, insbesondere Acetyl, Monoalkylamino oder Dialkylamino mit C₁-C₁₂, insbesondere C₁-C₆. Besonders bevorzugte hydrolysierbare Gruppen sind C₁-C₄-Alkoxygruppen, insbesondere Methoxy und Ethoxy.

Bevorzugt weist die Silanverbindung einen nicht-hydrolysierbaren organischen Rest R auf. Unter dem Begriff "nicht-hydrolysierbarer organischer Rest" ist im Rahmen der vorliegenden Erfindung ein organischer Rest zu verstehen, der in Gegenwart von Wasser nicht zur Bildung einer mit dem Si-Atom verknüpften OH-Gruppe oder NH2 -Gruppe führt. Der nicht-hydrolysierbare Rest R ist bevorzugt ausgewählt aus einer Gruppe umfassend substituiertes und nicht-substituiertes C₁-C₃₀-Alkyl, insbesondere C₅-C₂₅-Alkyl, substituiertes und nicht-substituiertes C₂-C₆-Alkenyl, substituiertes und nicht-substituiertes C₂-C₆-Alkinyl und substituiertes und nicht-substituiertes C₆-C₁₀-Aryl. Bevorzugt ist der nicht-hydrolysierbare Rest R ausgewählt aus der Gruppe enthaltend Methyl, Ethyl, n-Propyl, Isopropyl, n-Butyl, s-Butyl, t-Butyl, Pentyl, Hexyl, Cyclohexyl, Vinyl, 1-Propenyl, 2-Propenyl, Butenyl, Acetylenyl, Propargyl, Phenyl und Naphthyl.

Dabei kann der nicht-hydrolysierbare Rest R über mindestens eine funktionelle Gruppe Q verfügen. Darüber hinaus kann der Rest R auch mit weiteren Resten substituiert vorliegen. In einer Variante ist die mindestens eine funktionelle Gruppe Q ausgewählt aus einer Gruppe enthaltend Epoxid-, Hydroxy-, Ether-, Acryl-, Acryloxy-, Methacryl-, Methacryloxy-, Amino-, Alkoxy-, Cyano- und/oder Isocyano-Gruppe. Die mindestens eine funktionelle Gruppe Q, die im organischen nicht-hydrolysierbaren Rest R enthalten ist, umfasst in einer weiteren Variante vorteilhafterweise eine Epoxid-, insbesondere eine Glycidyl- oder Glycidyloxy-Gruppe, eine Alkoxy-, eine Amino- oder eine Isocyano-Gruppe.

Die funktionellen Gruppen, über die eine Vernetzung mit dem Polymerklebstoff und der Holzoberfläche möglich ist, umfassen insbesondere polymerisierbare und/oder polykondensierbare Gruppen, wobei unter der Polymerisationsreaktion auch Polyadditionsreaktionen zu verstehen sind. Die funktionellen Gruppen werden bevorzugt so ausgewählt, dass über gegebenenfalls katalysierte Polymerisations- und/oder Kondensationsreaktionen eine organische Vernetzung zwischen dem Polymerklebstoff und der Holzoberfläche und auch ggf. zwischen verschiedenen Klebstoffsystemen ausgeführt werden kann.

In einer besonders bevorzugten Ausführungsform werden als Silane Tetraethoxysilan, Methyltriethoxysilan, Gamma-Isocyanatopropyltriethoxysilan oder ein Glycidyloxypropyltriethoxysilan verwendet.

Der Begriff "substituiert", in Verwendung mit "Alkyl", "Alkenyl", "Aryl", etc., bezeichnet die Substitution eines oder mehrerer Atome, in der Regel H-Atome, durch einen oder mehrere der folgenden Substituenten, bevorzugt durch einen oder zwei der folgenden Substituenten: Halogen, Hydroxy, geschütztes Hydroxy, Oxo, geschütztes Oxo, C₃-C₇-Cycloalkyl, bicyclisches Alkyl, Phenyl, Naphthyl, Amino, geschütztes Amino, monosubstituiertes Amino, geschütztes monosubstituiertes Amino, disubstituiertes Amino, Guanidino, geschütztes Guanidino, ein heterozyklischer Ring, ein substituierter heterozyklischer Ring, Imidazolyl, Indolyl, Pyrrolidinyl, C₁-C₁₂-Alkoxy, C₁-C₁₂-Acyl, C₁-C₁₂-Acyloxy, Acryloyloxy, Nitro, Carboxy, geschütztes Carboxy, Carbamoyl, Cyano, Methylsulfonylamino, Thiol, C₁-C₁₀-Alkylthio und C₁-C₁₀-Alkylsulfonyl. Die substituierten Alkygruppen, Arylgruppen, Alkenylgruppen, können einmal oder mehrfach substituiert sein und bevorzugt 1- oder 2-mal, mit denselben oder unterschiedlichen Substituenten.

Der Begriff "Alkinyl", wie hier verwendet, bezeichnet einen Rest der Formel R-C=C-, insbesondere ein "C_{"}-C₆-Alkinyl". Beispiele für C₂-C₆-Alkinyle schließen ein: Ethinyl, Propinyl, 2-Butinyl, 2-Pentinyl, 3-Pentinyl, 2-Hexinyl, 3-Hexinyl, 4-Hexinyl, Vinyl sowie Di- und Tri-ine von geraden und verzweigten Alkylketten. Der Begriff "Aryl", wie hierin verwendet, bezeichnet aromatische Kohlenwasserstoffe, beispielsweise Phenyl, Benzyl, Naphthyl, oder Anthryl. Substituierte Arylgruppen sind Arylgruppen, die, wie oben definiert, mit einem oder mehreren Substituenten, wie oben definiert, substituiert sind. Der Begriff "Cycloalkyl" umfasst die Gruppen Cyclopropyl, Cyclobutyl, Cyclopentyl, Cyclohexyl und Cycloheptyl.

In einer bevorzugten Ausführungsform weist die vorliegende Bindemittelzusammensetzung mindestens zwei Silanverbindungen und besonders bevorzugt zwei unterschiedliche Verbindungen der allgemeinen Formel (I) und/oder (II) auf. Dabei ist eine Bindemittelzusammensetzung bevorzugt, in der eine erste Verbindung der Formel SiX₄ mit X OH oder Alkoxy, insbesondere Methoxy, Ethoxy, n-Propoxy oder i-Propoxy entspricht, und eine zweite Verbindung der Formel RₐSiX₍₄₋ₐ₎ mit a = 1 oder 2 entspricht, wobei X OH oder Alkoxy, insbesondere Methoxy, Ethoxy, n-Propoxy oder i-Propoxy ist, R Methyl, Ethyl, n-Propyl oder n-Butyl ist und Q Glycidyl- oder Glycidyloxy-Gruppe, eine Alkoxy, eine Amin-oder eine Isocyano-Gruppe ist. Hierbei kann das Molverhältnis von erster und zweiter Verbindung 0,1 bis 1 mol, bevorzugt 0,1 bis 0,5 mol, insbesondere bevorzugt 0,1 bis 0,4 mol betragen.

Weiterhin ist bevorzugt, dass die Menge an Reaktionsmischung aus wenigstens einer Silan-Verbindung, insbesondere der Formel (I) und/oder (II), und der wenigstens einen polyalkoholischen Verbindung bevorzugt 1 bis 20 Gew%, besonders bevorzugt 2 bis 15 Gew% und ganz besonders bevorzugt 3 bis 10 Gew% bezogen auf die Menge an Polymerklebstoff betragen. Der Gehalt der Silanverbindung, des Hydrophilierungsmittels und/oder des Phasentransferkatalsators, liegt bevorzugt jeweils zwischen 1 bis 30 Gew%, besonders bevorzugt 5 bis 20 Gew% und ganz besonders bevorzugt zwischen 10 bis 20 Gew%. Bei diesen Angaben ist der Lösemittelgehalt aus dem eingesetzten Polymerklebstoff jedoch zunächst nicht berücksichtigt.

Eine besonders bevorzugte Variante der vorliegenden Bindemittelzusammensetzung umfasst Tetraethylorthosilikat, Glycidyloxypropyltriethoxysilan, Sorbitol, Triethylbenzylammoniumchlorid als Phasentransferkatalysator und PMDI-Leim als Polymerklebstoff.

Eine vorteilhafte Weiterbildung des erfindungsgemäßen Verfahrens zum Herstellen eines Holzwerkstoffs sieht vor, dass die Zugabe der Bindemittelzusammensetzung zu dem Spanmaterial in Form einer Zugabe von zwei getrennten Komponenten der Bindemittelzusammensetzung erfolgt, wobei die eine Komponente eine den Polymerklebstoff aufweisende, organische Phase ist und die andere Komponente wenigstens eine wässrige Phase ist, die den Phasentransferkatalysator und/oder das Hydrophilierungsmittel enthält. Alternativ erfolgt die Zugabe des Phasentransferkatalysators und/oder des Hydrophilierungsmittels bevorzugt gemeinsam mit Paraffin, wobei besonders bevorzugt wird dabei der Phasentransferkatalysator und/oder das Hydrophilierungsmittel zuvor mit dem Paraffin gemischt. Der Auftrag der wässrigen Phase und/oder des Paraffins mit dem Phasentransferkatalysator und/oder dem Hydrophilierungsmittel auf das Spanmaterial erfolgt dabei besonders bevorzugt über Düsen oder Atomizer in einem Mischer oder wird im Coil auf das Spanmaterial aufgesprüht.

Bei einer weiteren bevorzugten Ausgestaltung des erfindungsgemäßen Verfahrens zum Herstellen eines Holzwerkstoffs wird der Phasentransferkatalysator und/oder das Hydrophilierungsmittel direkt auf das zu bindende Spanmaterial und /oder nicht zuerst der den Polymerklebstoff aufweisenden, organischen Phase zugesetzt, sodass beispielsweise bei einem Anlagenstillstand Vorreaktionen besonders wirkungsvoll vermieden werden können.

Obwohl auch ein Herstellen eines einschichtigen Holzwerkstoffs denkbar ist, wird der Holzwerkstoff bevorzugt aus wenigstens zwei sich voneinander unterscheidenden Schichten und/oder aus einer unteren Deckschicht, einer Mittelschicht und einer oberen Deckschicht aufgebaut, wobei wenigstens eine der Schichten, bevorzugt die Mittelschicht, eine Bindemittelzusammensetzung mit einem Phasentransferkatalysator und einem Hydrophilierungsmittel aufweist und wenigstens eine weitere Schicht eine Bindemittelzusammensetzung ohne oder mit einer geringeren Konzentration des Phasentransferkatalysators und/oder des Hydrophilierungsmittels aufweist. Dabei weisen die beiden Deckschichten bevorzugt eine zueinander identische Bindemittelzusammensetzung und/oder eine zueinander identische Bindemittelmenge auf. Besonders bevorzugt sind beide Deckschichten zueinander identisch gebildet. Weiterhin bevorzugt entspricht die Konzentration des Phasentransferkatalysators und/oder des Hydrophilierungsmittels in der Deckschicht zwischen 25 % und 75 %, bevorzugt zwischen 40 % und 60 % und besonders bevorzugt zwischen 45 % und 55 % der Konzentration in der Mittelschicht.

Der Gehalt an Bindemittelzusammensetzung in der Holzwerkstoffplatte, insbesondere einer OSB-Holzwerkstoffplatte, beträgt bevorzugt zwischen 0,5 und 5,0 Gew%, besonders bevorzugt 1,5 und 4,0 Gew% und ganz besonders bevorzugt 2,0 und 3,0 Gew% bezogen auf die Gesamtmenge der Holzfasern bzw. des Spanmaterials. In einer bevorzugten Ausführungsform wird die Bindemittelzusammensetzung auf die Holzspäne, auf das Spanmaterial oder auf die Holzfasern aufgesprüht.

Die Erfindung wird nachstehend anhand von Ausführungsbeispielen näher erläutert.

### Ausführungsbeispiel 1:

An einer Anlage zum Herstellen von OSB mit drei Schichten, einer Mittelschicht und zwei außenliegenden Deckschichten, wurde das als Strands bezeichnete Spanmaterial für eine Mittelschicht im Coil mit einer 12,5%igen Lösung von Inosil GS 55 als Silanverbindung und einer 20 %igen Lösung von TEBA (Triethylbenzylammoniumchlorid) als Phasentransferkatalysator besprüht. Die Menge an Inosil GS 55 lag bei 0,04 Gew% bezogen auf Holz atro und die Menge an TEBA bei 1,0 Gew% bezogen auf Holz atro.

Nachfolgend wurden die Strands der Mittelschicht mit 2,0 Gew% PMDI (polymeres Diphenylmethandiisocyanat) als Polymerklebstoff und 1 Gew% Paraffin besprüht. Aus den Mittelschichtstrands und Deckschichtstrands, die mit 2,9 Gew% PMDI und 1,0 Gew% Paraffin in einem Coil besprüht worden waren, wurde dann eine 18 mm OSB hergestellt. Das Verhältnis zwischen Deck- und Mittelschicht war mengenmäßig gleich.

Die OSB-Anlage wurde mit einer Geschwindigkeit von 450 mm/sec und mit den üblichen Drücken (200 - 500 N/cm²) sowie mit üblichen Temperaturen (210 - 250 °C) betrieben. Die mit den beschriebenen Parametern produzierte OSB erfüllt alle Vorgaben der für dieses Produkt geltenden Normen.

Bei einer Herstellung einer OSB ohne Inosil GS 55 und TEBA unter ansonsten gleichen Bedingungen und insbesondere einer gleichen Menge des Polymerklebstoffs sowie bei der gleichen Geschwindigkeit traten dagegen Spalter auf, sodass die Produktqualität als ungenügend beurteilt werden musste. Bei einer Herstellung von OSB entweder mit Inosil GS 55 oder mit TEBA mit den oben genannten Mengen, wurden zwar OSB erhalten, die aber unzureichend hohe Querzugfestigkeiten von unter 0,3 N/mm² besaßen. Auch die E-Module (längs und quer) der Platten lagen unter den Normanforderungen.

### Ausführungsbeispiel 2:

An einer Anlage zum Herstellen von OSB mit drei Schichten, einer Mittelschicht und zwei außenliegenden Deckschichten, wurde das als Strands bezeichnete Spanmaterial für eine Mittelschicht im Coil mit einer 12,5%igen Lösung von Inosil GS 55 und einer 20 %igen Lösung von TEBA (Triethylbenzylammoniumchlorid) besprüht. Die Menge an Inosil GS 55 lag bei 0,04 Gew% bezogen auf Holz atro und an TEBA bei 1,0 Gew% bezogen auf Holz atro. Die Strands wurden weiter mit 2,0 Gew% PMDI und 1 Gew% Paraffin besprüht.

Die Strands für die Deckschicht wurden im Coil mit einer 12,5%igen Lösung von Inosil GS 55 und einer 20%igen Lösung von TEBA (Triethylbenzylammoniumchlorid) besprüht. Die Menge an Inosil GS 55 lag bei 0,04 Gew% bezogen auf Holz atro und an TEBA bei 0,5 Gew% bezogen auf Holz atro. Die Strands wurden weiter mit 2,5 Gew% PMDI und 1 Gew% Paraffin besprüht.

Aus den Mittelschichtstrands und Deckschichtstrands wurde dann eine 18 mm OSB hergestellt. Das Verhältnis zwischen Deck- und Mittelschicht war mengenmäßig gleich. Die OSB-Anlage wurde mit einer Geschwindigkeit von 470 mm/sec und mit den üblichen Drücken (200 - 500 N/cm²) sowie mit üblichen Temperaturen (210 - 250 °C) betrieben. Die mit den beschriebenen Parametern produzierte OSB erfüllt alle Vorgaben der für dieses Produkt geltenden Normen.

Bei der Herstellung einer OSB ohne Inosil GS 55 und ohne TEBA in der Deck- und Mittelschicht unter ansonsten gleichen Bedingungen und insbesondere einer gleichen Menge des Polymerklebstoffs sowie bei der gleichen Geschwindigkeit traten abermals Spalter auf. Bei der Herstellung von OSB mit entweder Inosil GS 55 oder mit TEBA mit den oben genannten Mengen, wurden zwar OSB erhalten, die aber abermals unzureichende Querzugfestigkeiten unter 0,3 N/mm² besaßen. Auch die E-Module (längs und quer) der Platten lagen wieder unter den Normanforderungen.

Mit der erfindungsgemäßen Bindemittelzusammensetzung ist somit eine effektive Anlagennutzung möglich, wobei Leistungssteigerungen bis zu ca. 30 % möglich sind. Zudem kann die verwendete Menge des Polymerklebstoffes gering gehalten werden.

## Patentansprüche

1. Bindemittelzusammensetzung zum Herstellen eines Holzwerkstoffs, mit
- einer wenigstens einen Polmerklebstoff aufweisenden, organischen Phase,
- einer wässrigen Phase,
- einem Phasentransferkatalysator zum Beschleunigen des Aushärtens des Polymerklebstoffs sowie
- einem Hydrophilierungsmittel umfassend wenigstens eine Silanverbindung zum Erhöhen der Hydrophilie des Polymerklebstoffs und/oder zum Reduzieren des Eindringens des Polymerklebstoffs in das zu bindende Material des Holzwerkstoffs.

2. Bindemittelzusammensetzung zum Herstellen eines Holzwerkstoffs nach Anspruch 1, **dadurch gekennzeichnet, dass** der Phasentransferkatalysator ein Oniumion und bevorzugt ein Ammonium-, Phosphonium- und/oder Sulfoniumion aufweist und besonders bevorzugt Triethylbenzylammoniumchlorid ist.

3. Bindemittelzusammensetzung zum Herstellen eines Holzwerkstoffs nach Anspruch 1 oder 2, **dadurch gekennzeichnet, dass** der Phasentransferkatalysator ein Kronenether, insbesondere 12-Krone-4, ist.

4. Bindemittelzusammensetzung zum Herstellen eines Holzwerkstoffs nach wenigstens einem der vorhergehenden Ansprüche, **dadurch gekennzeichnet, dass** alle Polymerklebstoffe der organischen Phase ausschließlich Polyurethan-Klebstoffe sind.

5. Bindemittelzusammensetzung zum Herstellen eines Holzwerkstoffs nach wenigstens einem der vorhergehenden Ansprüche, **dadurch gekennzeichnet, dass** der einzige Polymerklebstoff ein Polyurethan-Klebstoff auf der Basis eines polymeren Diphenylmethandiisocyanats ist.

6. Bindemittelzusammensetzung zum Herstellen eines Holzwerkstoffs nach wenigstens einem der vorhergehenden Ansprüche, **dadurch gekennzeichnet, dass** das Hydrophilierungsmittel wenigstens einen Polyalkohol umfasst, ausgewählt aus einer Gruppe enthaltend vierwertige, fünfwertige, sechswertige Alditole oder einen höherwertigen Alkohol mit mehr als sechs Hydroxygruppen als eine polyalkoholische Verbindung.

7. Bindemittelzusammensetzung zum Herstellen eines Holzwerkstoffs nach Anspruch 6, **dadurch gekennzeichnet, dass** wenigstens ein Alditol ausgewählt ist aus einer Gruppe enthaltend als vierwertige Alkohole Threit, Erythrit, Pentaerythrit, als fünfwertige Alkohole Arabit, Adonit, Xylit und als sechswertige Alkohole Sorbit, Mannit, Dulcit, Dipentaerythrit.

8. Bindemittelzusammensetzung zum Herstellen eines Holzwerkstoffs nach wenigstens einem der vorhergehenden Ansprüche, **dadurch gekennzeichnet, dass** die wenigstens eine Silanverbindung eine Verbindung der allgemeinen Formel (I)
RₐSiX₍₄₋ₐ₎ (I),
oder der allgemeinen Formel (II)
O_{b}X_{c}(OH)_{d}RₑSiO(4-b-c-d-e)/2 (II),
ist, wobei
- X H, OH oder ein hydrolysierbarer Rest ausgewählt ist aus der Gruppe umfassend Halogen, Alkoxy, Carboxy, Amino, Monoalkylamino oder Dialkylamino, Aryloxy, Acyloxy, Alkylcarbonyl,
- R ein nicht-hydrolysierbarer organischer Rest R ausgewählt ist aus der Gruppe umfassend substituiertes und nicht-substituiertes Alkyl, substituiertes und nicht-substituiertes Aryl, substituiertes und nicht-substituiertes Alkenyl, substituiertes und nicht-substituiertes Alkinyl, substituiertes und nicht-substituiertes Cycloalkyl, die durch -O- oder-NH- unterbrochen sein können, und wobei
- R mindestens eine funktionelle Gruppe Q aufweisen kann, die ausgewählt ist aus einer Gruppe enthaltend eine Epoxid-, Hydroxy-, Ether-, Amino-, Monoalkylamino, Dialkylamino-, substituierte und nicht-substituierte Anilino-, Amid-, Carboxy-, Alkinyl-, Acryl-, Acryloxy-, Methacryl-, Methacryloxy-, Mercapto,-Cyano-, Alkoxy,- Isocyanato-, Aldehyd-, Alkylcarbonyl-, Säureanhydrid-und/oder Phosphorsäuregruppe,
- R und X jeweils gleich oder verschieden voneinander sein können, und
- a = 0, 1, 2, 3, insbesondere 0 oder 1 ist,
- b, c, d = 0 oder 1 sind, und
- e = 1, 2, 3 ist.

9. Verfahren zum Herstellen einer Bindemittelzusammensetzung nach einem der Ansprüche 1 - 8, mit den Schritten:
- Bereitstellen von wenigstens einer Silanverbindung,
- Zugabe von wenigstens einer polyalkoholischen Verbindung,
- bevorzugt Zugabe von mindestens einem Katalysator, insbesondere einer Säure, zu der Mischung aus wenigstens einer Silanverbindung und wenigstens einer polyalkoholischen Verbindung,
- Ausfällen und/oder Abtrennen des Reaktionsgemisches aus der wenigstens einen Silanverbindung und der wenigstens einen polyalkoholischen Verbindung,
- Zugabe des Phasentransferkatalysators, und
- Zugabe von mindestens einem Polymerklebstoffsystem zu dem Phasentransferkatalysator und/oder dem abgetrennten Reaktionsgemisch aus der wenigstens einen Silanverbindung und der wenigstens einen polyalkoholischen Verbindung.

10. Verfahren zum Herstellen eines Holzwerkstoffs, mit den Schritten:
- Herstellen und/oder Bereitstellen eines Spanmaterials,
- Zugabe einer Bindemittelzusammensetzung zu dem Spanmaterial, wobei die Bindemittelzusammensetzung eine wenigstens einen Polymerklebstoff aufweisende, organische Phase und eine zweite, mit der organischen Phase nicht mischbare wässrige Phase, einen Phasentransferkatalysator zum Beschleunigen des Aushärtens des Polymerklebstoffs sowie ein Hydrophilierungsmittel umfassend wenigstens eine Silanverbindung zum Erhöhen der Hydrophilie des Polymerklebstoffs und/oder zum Reduzieren des Eindringens des Polymerklebstoffs in das zu bindende Spanmaterial des Holzwerkstoffs aufweist, und
- Formen des Holzwerkstoffs aus dem beleimten Spanmaterial, insbesondere Verpressen zu einem plattenförmigen Holzwerkstoff.

11. Verfahren zum Herstellen eines Holzwerkstoffs nach Anspruch 10, **dadurch gekennzeichnet, dass** die Zugabe der Bindemittelzusammensetzung zu dem Spanmaterial in Form einer Zugabe von zwei getrennten Komponenten der Bindemittelzusammensetzung erfolgt, wobei die eine Komponente eine den Polymerklebstoff aufweisende, organische Phase ist und die andere Komponente wenigstens eine wässrige Phase ist, die den Phasentransferkatalysator und/oder das Hydrophilierungsmittel enthält.

12. Verfahren zum Herstellen eines Holzwerkstoffs nach Anspruch 10 oder 11, **dadurch gekennzeichnet, dass** der Phasentransferkatalysator und/oder das Hydrophilierungsmittel direkt auf das zu bindende Spanmaterial und /oder nicht zuerst der den Polymerklebstoff aufweisenden, organischen Phase zugesetzt wird.

13. Verfahren zum Herstellen eines Holzwerkstoffs nach wenigstens einem der vorhergehenden Ansprüche 10 - 13, **dadurch gekennzeichnet, dass** der Holzwerkstoff aus wenigstens zwei sich voneinander unterscheidenden Schichten und/oder aus einer unteren Deckschicht, einer Mittelschicht und einer oberen Deckschicht aufgebaut wird, wobei wenigstens eine der Schichten, bevorzugt die Mittelschicht, eine Bindemittelzusammensetzung mit einem Phasentransferkatalysator und einem Hydrophilierungsmittel aufweist und wenigstens eine weitere Schicht eine Bindemittelzusammensetzung ohne oder mit einer geringeren Konzentration des Phasentransferkatalysators und/oder des Hydrophilierungsmittels aufweist.

14. Verfahren zum Herstellen eines Holzwerkstoffs nach Anspruch 13, **dadurch gekennzeichnet, dass** die beiden Deckschichten eine zueinander identische Bindemittelzusammensetzung und/oder eine zueinander identische Bindemittelmenge aufweisen und/oder die Konzentration des Phasentransferkatalysators und/oder des Hydrophilierungsmittels in der Deckschicht zwischen 25 % und 75 %, bevorzugt zwischen 40 % und 60 % und besonders bevorzugt zwischen 45 % und 55 % der Konzentration in der Mittelschicht entspricht.

15. Holzwerkstoff, insbesondere hergestellt nach einem Verfahren gemäß wenigstens einem der Ansprüche 10 - 14, aufweisend wenigstens ein Spanmaterial sowie wenigstens eine ausgehärtete Bindemittelzusammensetzung in wenigstens einer Schicht des Holzwerkstoffs, insbesondere eine Bindemittelzusammensetzung nach wenigstens einem der Ansprüche 1 - 8, wobei die Bindemittelzusammensetzung wenigstens einen ausgehärteten Polymerklebstoff, einen Phasentransferkatalysator zum Beschleunigen des Aushärtens des Polymerklebstoffs sowie ein Hydrophilierungsmittel umfassend wenigstens eine Silanverbindung zum Erhöhen der Hydrophilie des Polymerklebstoffs und/oder zum Reduzieren des Eindringens des Polymerklebstoffs in das zu bindende Spanmaterial des Holzwerkstoffs aufweist.

## Claims

1. Binder composition for the manufacture of a wood-based material, comprising
an organic phase having at least one polymer adhesive,
an aqueous phase
a phase transfer catalyst to accelerate the curing of the polymer adhesive and a hydrophilizing agent comprising at least one silane compound for increasing the hydrophilicity of the polymer adhesive and/or for reducing the penetration of the polymer adhesive into the material of the wood-based material to be bonded.

2. Binder composition for the manufacture of a wood-based material according to claim 1, **characterized in that** the phase transfer catalyst has an onium ion and preferably an ammonium, phosphonium and/or sulfonium ion and is particularly preferably triethylbenzyl ammonium chloride.

3. Binder composition for the manufacture of a wood-based material according to claim 1 or 2, **characterized in that** the phase transfer catalyst is a crown ether, in particular 12-crown-4.

4. Binder composition for the manufacture of a wood-based material according to at least one of the preceding claims, **characterized in that** all polymer adhesives of the organic phase are exclusively polyurethane adhesives.

5. Binder composition for manufacturing a wood-based material according to at least one of the preceding claims, **characterized in that** the sole polymer adhesive is a polyurethane adhesive based on a polymeric diphenylmethane diisocyanate.

6. Binder composition for the manufacture of a wood-based material according to at least one of the preceding claims, **characterized in that** the hydrophilizing agent comprises at least one polyalcohol selected from a group containing tetravalent, pentavalent, hexavalent alditols or a higher-valent alcohol having more than six hydroxy groups as a polyalcoholic compound.

7. Binder composition for the manufacture of a wood-based material according to claim 6, **characterized in that** at least one alditol is selected from a group comprising as tetravalent alcohols threitol, erythritol, pentaerythritol, as pentavalent alcohols arabitol, adonitol, xylitol and as hexavalent alcohols sorbitol, mannitol, dulcitol, dipentaerythritol.

8. Binder composition for the manufacture of a wood-based material according to at least one of the preceding claims, **characterized in that** the at least one silane compound is a compound of the general formula (I)
Rₐ SiX₍₄₋ₐ₎ (I),
or the general formula (II)
O_{b} X_{c} (OH)_{d} Rₑ SiO(4-b-c-d-e)/2 (II),
wherein
- X is H, OH or a hydrolyzable group selected from the group consisting of halogen, alkoxy, carboxy, amino, monoalkylamino or dialkylamino, aryloxy, acyloxy, alkylcarbonyl,
- R is a non-hydrolyzable organic group R selected from the group consisting of substituted and unsubstituted alkyl, substituted and unsubstituted aryl, substituted and unsubstituted alkenyl, substituted and unsubstituted alkynyl, substituted and unsubstituted cycloalkyl, which may be interrupted by -O- or -NH-, and wherein
- R may have at least one functional group Q selected from a group consisting of an epoxide, hydroxy, ether, amino, monoalkylamino, dialkylamino, substituted and unsubstituted anilino, amide, carboxy, alkynyl, acrylic, acryloxy, methacrylic, methacryloxy, mercapto amide, carboxy, alkynyl, acrylic, acryloxy, methacrylic, methacryloxy, mercapto, cyano, alkoxy, isocyanato, aldehyde, alkylcarbonyl, acid anhydride and/or phosphoric acid group,
- R and X can be the same or different from each other, and
- a = 0, 1, 2, 3, in particular 0 or 1,
- b, c, d = 0 or 1, and
- e =1,2,3.

9. Method of manufacturing a binder composition according to any one of claims 1 - 8, comprising the steps of:
- providing at least one silane compound,
- addition of at least one polyalcoholic compound,
- preferably addition of at least one catalyst, in particular an acid, to the mixture of at least one silane compound and at least one polyalcoholic compound,
- precipitating and/or separating the reaction mixture of the at least one silane compound and the at least one polyalcoholic compound,
- addition of the phase transfer catalyst, and
- addition of at least one polymer adhesive system to the phase transfer catalyst and/or the separated reaction mixture of the at least one silane compound and the at least one polyalcoholic compound.

10. Method for manufacturing a wood-based material, comprising the steps of:
manufacturing and/or providimg a chip material,
adding a binder composition to the chip material, the binder composition comprising an organic phase having at least one polymer adhesive and a second aqueous phase immiscible with the organic phase, a phase transfer catalyst for accelerating the curing of the polymer adhesive and a hydrophilizing agent comprising at least one silane compound for increasing the hydrophilicity of the polymer adhesive and/or for reducing the ingress of the polymer adhesive into the chip material of the wood-based material to be bonded, and
forming the wood-based material from the glued chip material, in particular pressing it into a board-shaped wood-based material.

11. Method for manufacturing a wood-based material according to claim 10, **characterized in that** the addition of the binder composition to the chip material is carried out in the form of an addition of two separate components of the binder composition, wherein one component is an organic phase having the polymer adhesive and the other component is at least one aqueous phase containing the phase transfer catalyst and/or the hydrophilizing agent.

12. Method for manufacturing a wood-based material according to claim 10 or 11, **characterized in that** the phase transfer catalyst and/or the hydrophilizing agent is added directly to the chip material to be bonded and/or is not first added to the organic phase having the polymer adhesive.

13. Method for manufacturing a wood-based material according to at least one of the preceding claims 10 - 13, **characterized in that** the wood-based material is formed from at least two layers differing from one another and/or from a lower surface layer, a core layer and an upper surface layer, at least one of the layers, preferably the core layer, having a binder composition with a phase transfer catalyst and a hydrophilizing agent and at least one further layer having a binder composition without or with a lower concentration of the phase transfer catalyst and/or the hydrophilizing agent.

14. Method for manufacturing a wood-based material according to claim 13, **characterized in that** the two surface layers have an identical binder composition and/or an identical amount of binder and/or the concentration of the phase transfer catalyst and/or the hydrophilizing agent in the surface layer corresponds to between 25% and 75%, preferably between 40% and 60% and particularly preferably between 45% and 55% of the concentration in the core layer.

15. A wood-based material, in particular manufactured by a method according to at least one of claims 10 - 14, having at least one chip material and at least one cured binder composition in at least one layer of the wood-based material, in particular a binder composition according to at least one of claims 1-8, wherein the binder composition has at least one cured polymer adhesive, a phase transfer catalyst for accelerating the curing of the polymer adhesive and a hydrophilizing agent comprising at least one silane compound for increasing the hydrophilicity of the polymer adhesive and/or for reducing the penetration of the polymer adhesive into the chip material of the wood-based material to be bonded.

## Revendications

1. Composition de liant pour la fabrication d'un matériau à base de bois, comprenant
une phase organique contenant au moins un adhésif polymère,
une phase aqueuse
un catalyseur de transfert de phase pour accélérer le durcissement de l'adhésif polymère et
un agent hydrophilisant comprenant au moins un composé de silane pour augmenter l'hydrophilie de l'adhésif polymère et/ou pour réduire la pénétration de l'adhésif polymère dans le matériau à base de bois à coller.

2. Composition de liant pour la fabrication d'un matériau à base de bois selon la revendication 1, **caractérisée par le fait que** le catalyseur de transfert de phase a un ion onium et de préférence un ion ammonium, phosphonium et/ou sulfonium et est de préférence le chlorure de triéthylbenzyl ammonium.

3. Composition de liant pour la fabrication d'un matériau à base de bois selon la revendication 1 ou 2, **caractérisée par le fait que** le catalyseur de transfert de phase est un éther-couronne, en particulier le 12-couronne-4.

4. Composition de liant pour la fabrication d'un matériau à base de bois selon au moins l'une des revendications précédentes, **caractérisée par le fait que** toutes les adhésifs polymères de la phase organique sont exclusivement des colles polyuréthanes.

5. Composition de liant pour la fabrication d'un matériau à base de bois selon au moins l'une des revendications précédentes, **caractérisée par le fait que** le seul adhésif polymère est un adhésif polyuréthane à base de diisocyanate de diphénylméthane polymère.

6. Composition de liant pour la fabrication d'un matériau à base de bois selon au moins l'une des revendications précédentes, **caractérisée en ce que** l'agent hydrophilisant comprend au moins un polyalcool choisi dans un groupe contenant des alditols tétravalents, penta-valents, hexavalents ou un alcool de valence supérieure ayant plus de six groupes hydroxy en tant que composé polyalcoolique.

7. Composition de liant pour la fabrication d'un matériau à base de bois selon la revendication 6, **caractérisée par le fait qu'**au moins un alditol est choisi dans un groupe comprenant comme alcools tétravalents le thréitol, l'é-rythritol, le pentaérythritol, comme alcools penta-valents l'arabitol, l'adonitol, le xylitol et comme alcools hexavalents le sorbitol, le mannitol, le dulcitol, le dipentaérythritol.

8. Composition de liant pour la fabrication d'un matériau à base de bois selon au moins l'une des revendications précédentes, **caractérisée par le fait que** le au moins un composé silane est un composé de formule générale (I).
Rₐ SiX₍₄₋ₐ₎ (I) ,
ou la formule générale (II)
O_{b} X_{c} (OH)_{d} Rₑ SiO(4-b-c-d-e)/2 (II),
dans lequel
- X est H, OH ou un groupe hydrolysable choisi dans le groupe constitué par l'halogène, l'alcoxy, le carboxy, l'amino, le monoalkylamino ou le dialkylamino, l'aryloxy, l'acyloxy, l'alkylcarbonyle,
- R est un groupe organique non hydrolysable R choisi dans le groupe comprenant un alkyle substitué et non substitué, un aryle substitué et non substitué, un alcényle substitué et non substitué, un alcynyle substitué et non substitué, un cycloalkyle substitué et non substitué, qui peuvent être interrompus par -O-ou -NH-, et dans lequel
- R peut avoir au moins un groupe fonctionnel Q choisi dans un groupe constitué d'un époxyde, d'un hydroxy, d'un éther, d'un amino, d'un monoalkylamino, d'un dialkylamino, d'un aniline substitué et non substitué, d'un amide, d'un carboxy, d'un alcynyl, d'un acrylique, acryloxy, méthacrylique, méthacryloxy, mercapto amide, carboxy, alcynyl, acrylique, acryloxy, méthacrylique, méthacryloxy, mercapto, cyano, alcoxy, isocyanato, aldéhyde, alkylcarbonyle, anhydride d'acide et/ou acide phosphorique,
- R et X peuvent être identiques ou différents l'un de l'autre, et
- a = 0, 1, 2, 3, en particulier 0 ou 1,
- b, c, d = 0 ou 1, et
- e = 1, 2, 3.

9. Procédé de fabrication d'une composition de liant selon l'une des revendications 1 à 8, comprenant les étapes suivantes :
- fournir au moins un composé de silane,
- l'addition d'au moins un composé polyalcoolique,
- de préférence l'addition d'au moins un catalyseur, en particulier un acide, au mélange d'au moins un composé silane et d'au moins un composé polyalcoolique,
- précipiter et/ou séparer le mélange réactionnel du composé silane au moins et du composé polyalcoolique au moins,
- l'ajout du catalyseur de transfert de phase, et
- l'addition d'au moins un système adhésif polymère au catalyseur à transfert de phase et/ou au mélange réactionnel séparé du composé silane au moins et du composé polyalcoolique au moins.

10. Procédé de fabrication d'un matériau à base de bois, comprenant les étapes suivantes
la fabrication et/ou la fourniture d'un matériau pour les puces,
ajouter une composition de liant au matériau en copeaux, la composition de liant comprenant une phase organique contenant au moins un adhésif polymère et une seconde phase aqueuse non miscible avec la phase organique, un catalyseur de transfert de phase pour accélérer le durcissement de l'adhésif polymère et un agent hydrophilisant comprenant au moins un composé de silane pour augmenter l'hydrophilie de l'adhésif polymère et/ou pour réduire la pénétration de l'adhésif polymère dans le matériau en copeaux du matériau à base de bois à coller, et
former le matériau à base de bois à partir du matériau en copeaux collé, notamment en le pressant pour obtenir un matériau à base de bois en forme de planche.

11. Procédé de fabrication d'un matériau à base de bois selon la revendication 10, **caractérisé par le fait que** l'addition de la composition de liant au matériau en copeaux est effectuée sous la forme d'une addition de deux composants séparés de la composition de liant, dans laquelle un composant est une phase organique contenant le adhésif polymère et l'autre composant est au moins une phase aqueuse contenant le catalyseur de transfert de phase et/ou l'agent hydrophilisant.

12. Procédé de fabrication d'un matériau à base de bois selon la revendication 10 ou 11, **caractérisé par le fait que** le catalyseur de transfert de phase et/ou l'agent hydrophilisant est ajouté directement au matériau en copeaux à coller et/ou n'est pas d'abord ajouté à la phase organique contenant l'adhésif polymère.

13. Procédé de fabrication d'un matériau à base de bois selon au moins l'une des revendications précédentes 10 - 13, **caractérisé par le fait que** le matériau à base de bois est formé d'au moins deux couches différentes l'une de l'autre et/ou d'une couche de finition inférieure, d'une couche intermédiaire et d'une couche de finition supérieure, au moins l'une des couches, de préférence la couche intermédiaire, ayant une composition de liant avec un catalyseur de transfert de phase et un agent hydrophilisant et au moins une autre couche ayant une composition de liant sans ou avec une concentration plus faible du catalyseur de transfert de phase et/ou de l'agent hydrophilisant.

14. Procédé de fabrication d'un matériau à base de bois selon la revendication 13, **caractérisé en ce que** les deux couches de finition ont une composition de liant identique et/ou une quantité de liant identique et/ou la concentration du catalyseur de transfert de phase et/ou de l'agent hydrophilisant dans la couche de finition correspond à une valeur comprise entre 25% et 75%, de préférence entre 40% et 60% et de manière particulièrement préférée entre 45% et 55% de la concentration dans la couche intermédiaire.

15. Matériau à base de bois, en particulier fabriqué par un procédé selon au moins l'une des revendications 10 à 14, comportant au moins un matériau en copeaux et au moins une composition de liant durcie dans au moins une couche du matériau à base de bois, en particulier une composition de liant selon au moins l'une des revendications 1 à 8, dans laquelle la composition de liant comporte au moins un adhésif polymère durci, un catalyseur de transfert de phase pour accélérer le durcissement de l'adhésif polymère et un agent hydrophilisant comprenant au moins un composé de silane pour augmenter l'hydrophilie de l'adhésif polymère et/ou pour réduire la pénétration de l'adhésif polymère dans les copeaux du matériau à base de bois à coller.
